# FASCICULE DE BREVET EUROPEEN

(11) **EP 1 625 958 B1**
(45) Date de publication et mention de la délivrance du brevet: **27.04.2011**
(21) Numéro de dépôt: 05107268.4
(22) Date de dépôt: 08.08.2005
(51) Int. Cl.: B60J 7/00

(54) **Store à enrouleur multi-position pour véhicule automobile, et véhicule correspondant**
Mehr-Stellung Rolloeinheit für Kraftfahrzeug, und entsprechendes Kraftfahrzeug
Multi-position roller blind for vehicle, and corresponding vehicle

(30) Priorité: 10.08.2004 FR 0408806; 24.09.2004 FR 0410167
(43) Date de publication de la demande: 15.02.2006
(73) Titulaire: Advanced Comfort Systems France SAS - ACS France, 79300 Bressuire (FR)
(72) Inventeur: Destouches, Nicolas, 35650 Le Rheu (FR); Nai, Tvisak, 79200 Chatillon sur Thouet (FR)
(74) Mandataire: Bioret, Ludovic

(56) Documents cités:
- FR-A- 2 848 919
- US-A1- 2002 167 202
- US-A1- 2003 184 127
- US-A1- 2004 040 676
- US-A1- 2004 080 189
- US-B1- 6 481 787

## Description

Le domaine de l'invention est celui des stores à enrouleur, notamment pour l'occultation d'une surface vitrée d'un véhicule, par exemple pour une baie et/ou pavillon vitré d'un véhicule. L'invention s'applique aussi aux stores cache-bagages, notamment pour les breaks et les monospaces. Plus précisément, l'invention concerne les stores mettant en oeuvre une toile d'occultation mobile entre une position repliée et une position déployée, en particulier, mais non exclusivement, pour un pavillon de véhicule.

De façon de plus en plus répandue, les pavillons des véhicules automobiles sont pourvus d'une baie et/ou d'une ouverture vitrée.

Une tendance actuelle est en effet de proposer des véhicules automobiles présentant de plus en plus de surfaces vitrées. On cherche donc à augmenter tant que faire se peut la surface vitrée des portes latérales, des pare-brise et des lunettes arrière, et également des pavillons.

Les objectifs de cette tendance sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

On comprend aisément qu'il est nécessaire de prévoir des moyens d'occultation, pour protéger l'habitacle et ses occupants du soleil. Diverses solutions ont été proposées pour limiter le passage des rayons du soleil, notamment en utilisant des vitres teintées ou en rapportant un motif filtrant sur la vitre par sérigraphie.

On propose également souvent un ou plusieurs stores. Les stores à enrouleur connus, comprenant une toile mobile entre une position déployée et une position repliée, du type de ceux utilisés pour les pare-brises, les vitres latérales ou les lunettes arrières, ont ainsi été adaptés et/ou perfectionnés en vue d'être mis en oeuvre en regard de pavillons vitrés.

Du fait notamment de la grande surface sur laquelle peuvent s'étendre de tels stores, il apparaît souhaitable que leur déploiement puisse être modulable, c'est-à-dire qu'un store ne doive pas être obligatoirement intégralement déployé, mais qu'il puisse au contraire être déployé de façon partielle, par exemple pour conserver une certaine luminosité, ou pour permettre à plusieurs passagers de choisir sélectivement de se protéger ou non des rayons du soleil.

Dans le cas des stores motorisés, il est relativement aisé de déployer et de maintenir la toile en différentes positions intermédiaires d'occultation. En effet, la barre de tirage de ces stores est déplacée le long de rails à l'aide de moyens d'entraînement qui peuvent maintenir à eux seuls la barre de tirage dans la position qu'elle occupe lors de l'arrêt des moyens de motorisation.

Dans le cas des stores manuels, cela n'est pas aussi simple. En effet, des moyens de rappel sont prévus pour commander le repliement de la toile. Dès que l'utilisateur lâche la toile (ou plus précisément la barre de tirage) dans une position intermédiaire de déploiement, celle-ci revient automatiquement dans sa position repliée.

Il est donc nécessaire de prévoir des moyens d'accrochage de la barre de tirage pour maintenir la toile en position complètement déployée, ceci pour éviter que la toile ne se ré-enroule sous l'effet des moyens de rappel élastiques généralement couplés au tube enrouleur du store pour faciliter le repli de la toile.

Quelques solutions ont été proposées pour arrêter un store manuel dans une ou plusieurs positions intermédiaires.

On peut ainsi envisager de rapporter au voisinage de la baie des moyens d'accrochage de la barre de tirage, constitués par exemple de crochets, de crémaillères,... Mais cela supposerait des manipulations relativement complexes (dans plusieurs directions) et non instinctives pour l'utilisateur, tant pour l'accrochage que pour le décrochage. En outre, ces moyens d'accrochage seraient sans doute apparents à l'intérieur de l'habitacle du véhicule, ce qui n'est pas acceptable, pour des raisons de sécurité, d'ergonomie et d'esthétique (notamment dans le cas d'un pavillon en verre).

La Demanderesse a proposé une technique de store manuel permettant de déployer la toile en une ou plusieurs positions intermédiaires.

Selon cette technique, les rails de guidage dans lesquels coulissent des patins portés par la barre de tirage présentent une piste aller (dédiée au déploiement de la toile) et une piste retour (dédiée au repliement), au moins un élément d'arrêt étant prévu entre les pistes pour recevoir et maintenir le patin correspondant.

Une telle technique permet effectivement de déployer la toile en une ou plusieurs positions intermédiaires.

Toutefois, la mise en oeuvre de cette solution nécessite la conception et la réalisation de rails de guidage relativement complexes. En outre, la ou les positions intermédiaires de déploiement sont prédéterminées par la structure des rails et en nombre limité.

Le document US 2003/184127 A1 présente une autre technique de store manuel selon laquelle des patins portés par la barre de tirage comportent des lames ressort venant en appui sur les rails dans lesquels ils coulissent. Ces lames bloquent ainsi le mouvement du store par frottement. Ce mécanisme de blocage présente notamment l'inconvénient de ne pas pouvoir être désactivé.

L'invention a notamment pour objectif de pallier ces inconvénients de l'art antérieur.

Plus précisément, l'invention a pour objectif de proposer un store d'occultation qui permette le déploiement et l'arrêt de la toile en des positions intermédiaires quelconques, selon les besoins ou la volonté de l'utilisateur.

L'invention a également pour objectif de fournir un tel store qui soit moins complexe et/ou moins coûteux à réaliser que les stores à arrêt de la toile en position intermédiaire de l'art antérieur. L'invention a aussi pour objectif de fournir un tel store qui ne nuise pas à l'esthétique de la baie au voisinage de laquelle le store est monté, et/ou qui n'encombre pas l'environnement de cette baie.

L'invention a également pour objectif de fournir un tel store d'occultation qui soit ergonomique et d'utilisation aisée et instinctive.

Un autre objectif de l'invention est encore de fournir un tel store d'occultation qui soit simple de conception et facile à monter et à mettre en oeuvre.
Ces objectifs, ainsi que d'autres qui apparaîtront plus clairement par la suite, sont atteints à l'aide d'un store à enrouleur d'un véhicule automobile, selon la revendication 1.

On peut ainsi arrêter la toile dans toute position intermédiaire de déploiement (arrêt toutes positions) ou dans une multiplicité de positions, selon les modes de réalisation, de façon simple et efficace. Le blocage peut, comme on le verra par la suite, être obtenu notamment par frottement, ou friction, ou par engagement de deux éléments.

Selon une première approche avantageuse de l'invention, lesdits moyens de transmission comprennent au moins une tige flexible portant ou agissant sur le ou lesdits éléments de blocage.

De façon avantageuse, ladite ou lesdites tiges flexibles sont guidées par au moins un élément de guidage porté par ladite barre de tirage.

Ainsi, selon un premier mode de réalisation avantageux de l'invention, le store comprend une tige flexible pouvant prendre :
- une position de déplacement, dans laquelle elle est sensiblement linéaire et permet le déplacement de la barre de tirage le long desdits rails de guidage ;
- une position d'arrêt, dans laquelle elle est arquée ou forme un angle, de façon que ces extrémités agissent sur lesdits éléments de blocage pour qu'ils coopèrent avec lesdits rails de guidage, de façon à immobiliser
ladite barre de tirage par rapport auxdits rails.

L'élément de blocage va alors coopérer avec (au moins) l'une des parois latérales du rail.

Selon un autre mode de réalisation avantageux, ladite tige flexible est guidée de façon que le déplacement du ou desdits éléments de blocage se fasse essentiellement dans un plan parallèle au plan de ladite toile.

Dans ce cas, il comprend préférentiellement une tige flexible guidée par au moins deux éléments de guidage de façon que, en partie centrale, elle se déplace essentiellement perpendiculairement audit plan de ladite toile.

De façon avantageuse, lesdits moyens d'actionnement agissent directement sur la partie centrale de ladite barre flexible.

Selon encore un autre mode préférentiel de réalisation, lesdits moyens de transmission comprennent au moins une tige rigide.

Selon une caractéristique avantageuse de l'invention, lesdits moyens de transmission mettent en oeuvre un jeu de rampes inclinées.

Ainsi, lesdits moyens de transmission comprennent préférentiellement deux bras présentant chacun une rampe inclinée, sur lesquelles ledit élément d'actionnement peut agir simultanément.

Avantageusement, chacun desdits bras se déplace sensiblement parallèlement au plan défmi par ladite toile.

Selon un aspect avantageux de l'invention, le store comprend des moyens de rappel tendant à le ramener dans ladite position d'arrêt.

Ainsi, ces moyens de rappel peuvent être montés entre un guide de coulissement de chacune desdites tiges et l'élément de blocage correspondant. Ils peuvent également être prévus au niveau des moyens de commande.

Lorsque l'on met en oeuvre une tige flexible, il est bien sûr possible d'utiliser cette flexibilité pour assurer cette fonction de retour dans la position d'arrêt.

De façon préférentielle, lesdits moyens d'actionnement se déplacent sensiblement perpendiculairement au plan défini par ladite toile.

La manipulation est ainsi simple et instinctive, et peut aisément être combinée avec le déplacement de la barre de tirage.

Avantageusement, lesdits moyens d'actionnement comprennent une poignée.

Selon une approche avantageuse de l'invention, au moins un desdits élément de blocage coopère avec ledit rail par frottement, dans ladite position d'arrêt.

Dans ce cas, au moins un desdits élément de blocage est avantageusement réalisé en au moins deux matériaux, pour obtenir un meilleur blocage.

Selon d'autres modes de réalisation, on peut prévoir qu'au moins un desdits élément de blocage coopère avec ledit rail par engagement d'une pièce mâle dans une pièce femelle ou par mise en butée de deux pièces configurées à cet effet, dans ladite position d'arrêt.

Selon une autre cinématique avantageuse, lesdits moyens de blocage effectuent un mouvement de rotation, lors du passage de ladite position d'arrêt à ladite position de déplacement, et inversement. Les éléments de blocage peuvent alors se présenter sous la forme d'un patin excentrique (venant prendre appui contre une paroi du rail) ou d'une came, coopérant avec une ou plusieurs crémaillères prévues sur le rail).

Un tel store d'occultation peut notamment être destiné à occulter au moins une portion d'au moins un des éléments appartenant au groupe comprenant :
- les pavillons vitrés ;
- les vitres arrière ;
- les pare-brise ;
- les vitres latérales ;
- les toits ouvrants ;
- les coffres à bagages.

L'invention concerne également les véhicules automobiles équipés d' au moins un store à enrouleur tel que décrit ci-dessus.

D'autres caractéristiques et avantages de l'invention apparaîtront plus clairement à la lecture de la description suivante de deux modes de réalisation préférentiel de l'invention, donné à titre d'exemple illustratif et non limitatif, et des dessins annexés parmi lesquels :
- la figure 1 est une vue d'un store selon un premier mode de réalisation de l'invention, dans une position de blocage de la position de la toile ;
- la figure 2 est une vue d'un store selon un deuxième mode de réalisation de l'invention, dans une position de déploiement/repliement de la toile ;
- les figures 3 et 4 sont des vues schématiques d'une variante de réalisation du premier mode de réalisation, respectivement en position de blocage et en position de déploiement/repli de la toile ;
- les figures 5 et 6 sont des vues schématiques d'un troisième mode de réalisation de l'invention, respectivement en position de blocage et en position de déploiement/repli de la toile.

Ces différentes figures sont volontairement schématiques, pour mieux mettre en évidence les aspects importants de l'invention. Les échelles ne sont pas forcément respectées.

Comme mentionné précédemment, le principe de l'invention réside dans le fait de permettre l'actionnement d'un ou de plusieurs éléments, ou organes, de blocage dans les rails de guidage de store, ces organes pouvant être immobilisés (par exemple plaqués) en tous points de la longueur d'une paroi longitudinale interne des rails, ou en une pluralité de points prédéfinis.

Les trois modes de réalisation décrits ci-après concernent un store manuel. Le même principe peut cependant également être mis en oeuvre sur un store motorisé, à titre de moyens d'arrêt principal, complémentaire ou de secours.

On rappelle qu'un tel store comprend une toile d'occultation solidaire par l'une de ses extrémités d'un tube d'enroulement, et par l'autre de ses extrémités d'une barre de tirage (formant moyens d'entraînement de la toile), le tube d'enroulement étant couplé à des moyens de rappel élastiques pour assurer et/ou assister le ré-enroulement de la toile.

Notamment dans le cas des stores destinés à occulter des surfaces relativement larges, telles que par exemple des pavillons vitrés de véhicule, on prévoit également des rails de guidage du coulissement de la barre de tirage, celle-ci portant alors à chacune de ses extrémités des patins de coulissement, coopérant avec ces rails.

L'invention concerne plus précisément de tels stores à enrouleur. Selon les différents modes de réalisation de l'invention décrits ci-après, la barre de tirage porte des moyens d'actionnement, placés par exemple au voisinage d'une poignée, et permettant à l'utilisateur de passer d'une position d'arrêt (dans laquelle la barre de tirage est maintenue immobile par rapport à ses rails de guidage) à une position de déplacement (dans laquelle l'utilisateur peut régler la position de la barre de tirage, et donc celle de la toile).

Les moyens d'actionnement sont préférentiellement conçus de façon qu'il suffit de prendre en main la poignée pour passer en position de déplacement, et que le retour à la position d'arrêt se fasse automatiquement, lorsqu'on lâche la poignée. Le déplacement des moyens d'actionnement est donc avantageusement perpendiculaire au plan défini par la toile déployée.

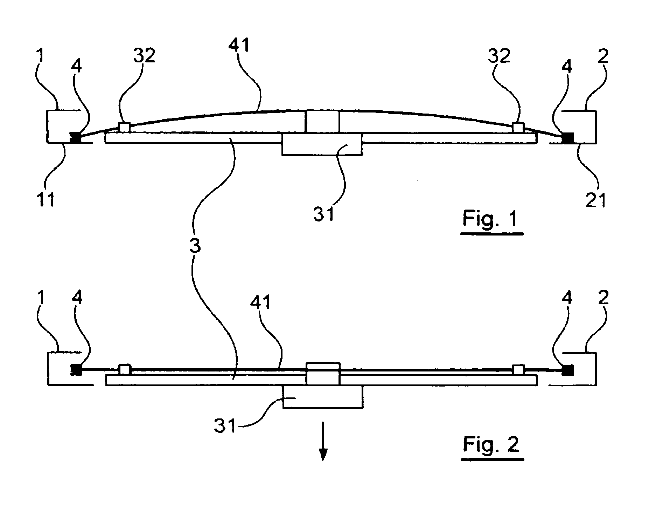

Les figures 1 et 2 sont des vues schématiques en coupe d'un store selon un premier mode de réalisation de l'invention, respectivement en position de blocage de la toile et en position de déploiement/repli de la toile.

Tel qu'illustré par ces figures, un store selon le présent mode de réalisation de l'invention comprend deux rails de guidage 1, 2 dans lesquels sont susceptibles de coulisser des patins portés par les extrémités d'une barre de tirage 3 (formant moyens d'entraînement de la toile).

De plus, le store comprend une poignée 31 portée par la barre de tirage et par l'intermédiaire de laquelle on actionne la toile pour procéder à son repli.

Cette poignée 31 permet également d'agir sur des éléments de verrouillage, et en conséquence sur la position d'organes de blocage 4 placés à l'intérieur des rails 1, 2 et mobiles entre deux positions :
- une position plaquée contre des parois longitudinales internes 11, 21 des rails 1, 2 (figure 1) ;
- une position dégagée des parois internes 11, 21 autorisant le déploiement ou le repli de la toile (figure 2).

Ces organes de blocage 4 peuvent, selon les différents modes de réalisation, assurer le rôle des patins de coulissement, être indépendants de ceux-ci ou coopérer avec eux. Les organes de blocage 4 sont reliés entre eux par une tige flexible 41, couplée par ailleurs à la poignée 31, qui comprend les moyens d'actionnement. La tige flexible 41 forme ainsi moyen de transmission aux organes de blocage d'une action opérée sur la poignée 31.

On note que ces moyens de transmission pourraient, selon un autre mode de réalisation envisageable, être constitués par une ou plusieurs tiges flexibles et/ou articulées.

Selon le présent mode de réalisation, ces moyens de transmission sont donc constitués par une tige réalisée en un matériau élastiquement déformable portant à ses extrémités les organes de blocage 4, et couplée en son centre (ou approximativement) à la poignée 31. Elle est également montée sur la barre de tirage par l'intermédiaire de deux éléments 32 de maintien et de guidage en flexion.

On comprend que la tige 41 est engagée dans les éléments 32 par une liaison qui lui permet de coulisser, ceci avec suffisamment de jeu pour que la tige puisse changer de direction (lors d'une flexion ou d'un retour de flexion) par rapport à ces éléments 32.

Des moyens de rappel élastiques (non représentés) peuvent agir sur la poignée 31 de façon que, dans la position de blocage (figure 1), la poignée impose une flexion entre les éléments 32, ce qui se traduit par un plaquage des organes de blocage 4 contre une paroi des rails 1, 2. Ce résultat peut également être obtenu par la conformation de la tige flexible.

Le fonctionnement d'un store selon ce premier mode de réalisation de l'invention tel que celui qui vient d'être décrit est le suivant.

Le store est dans la position illustrée par la figure 1, lorsque la poignée est tirée vers le bas ou, plus généralement, selon une direction normale à la surface à occulter (correspondant par exemple à une traction de la poignée vers l'intérieur du véhicule, dans le cas d'un store destiné à occulter un pavillon vitré).

Lorsqu'une telle action est exercée sur la poignée, la tige 41 est également tirée en son centre, ce qui tend, à l'aide des éléments 32, à la ramener dans une position sensiblement rectiligne telle que celle illustrée par la figure 2.

Dans cette configuration de la tige 41, les organes de blocage 4 sont en retrait des parois 11, 21 et la toile du store peut être librement déployée ou repliée en manipulant la poignée 31 le long des rails (tout en la maintenant tirée vers le bas).

Lorsqu'on relâche la poignée, les moyens de rappel (non représentés) tendent à ramener la poignée dans une position telle que celle illustrée par la figure 1, et donc à maintenir le store dans la position de déploiement choisi.

On note que, selon un autre mode de réalisation envisageable, la poignée pourrait être ramenée en position de blocage manuellement, en l'absence de moyens de rappel.

Ce blocage est obtenu par friction contre un ou plusieurs bords du rail. Les matériaux sont choisis pour optimiser ce blocage. Le même principe peut être adapté à d'autres moyens de blocage, par exemple de type crémaillère, engrenage, aimant, surfaces agrippantes, ...

Dans tous les cas, lorsque la poignée est en position de blocage, elle provoque la flexion de la tige 41, ce qui entraîne le plaquage des organes de blocage 4 contre les parois 11, 21 des rails 1, 2.

Les organes de blocage 4 exercent alors une force de frottement prévue pour bloquer la toile en position, à l'encontre de l'effort de rappel produit par les moyens de rappel associés au tube d'enroulement de la toile.

Selon un mode de réalisation simplifié, les organes de blocage peuvent être constitués directement par l'extrémité de la tige 41. Dans d'autres cas, l'organe de blocage peut être un patin fixé ou moulé sur cette extrémité.

Comme déjà mentionné, un store selon l'invention peut être monté pour occulter un pavillon vitré ou, de façon similaire, un toit ouvrant, une vitre latérale, une vitre de hayon arrière ou encore un coffre à bagages.

Le montage d'un tel store peut être effectué de la façon suivante :
- La tige 41 (ou les tiges) est enfilée dans les éléments 32 de la barre de tirage, puis on vient clipper la poignée 31 sur la tige 41 ;
- Les organes de blocage 4 sont ensuite clippés sur la tige 41, puis la toile est fixée en venant pincer celle-ci entre la barre de tirage et un élément de renfort que l'on vient clipper sur la barre de tirage.

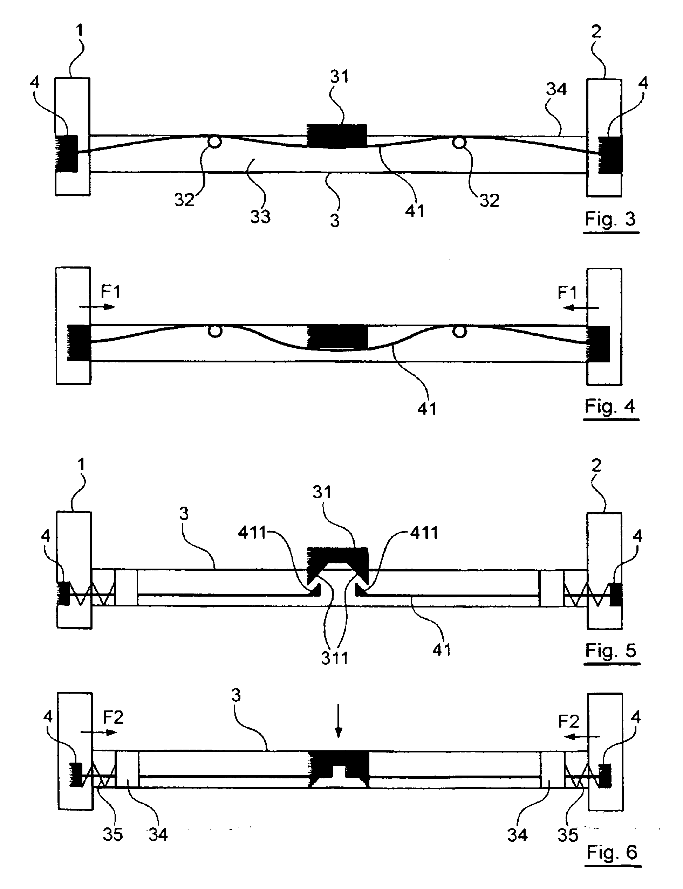

Les figures 3 et 4 illustrent schématiquement une variante de réalisation du mode de réalisation qui vient d'être décrit.

Tel que cela apparaît sur ces figures, la barre de tirage 3 (qui peut prendre la forme d'une barre creuse) reçoit la tige flexible est montée dans l'évidement ou l'espace 33. Elle est guidée, de part et d'autre de la poignée 31, entre un élément rapporté et une paroi 34 de la barre de tirage.

Selon cette solution, lorsque la poignée 31 est actionnée (vers le bas dans le présent mode de réalisation) la déformation de la tige 41 est accentuée ce qui tend à déplacer les organes de blocage 4 tel qu'indiqué par les flèches F1 (c'est à dire dans un plan parallèle à celui de la toile) et à permettre le déploiement/repli de la toile.

Lorsqu'on relâche la poignée 31, l'élasticité de la tige 41 tend à ramener celle-ci dans une configuration telle que celle illustrée par la figure 3, en position de blocage (les organes 4 étant alors plaqués contre la paroi de fond de rails 1, 2.

Les figures 5 et 6 illustrent un troisième mode de réalisation de l'invention.

Tel que cela apparaît, l'élément de verrouillage comprend ici deux bras 41 présentant chacun à une de deux de leurs extrémités une rampe inclinée 411 et à l'autre de leurs extrémités un organe de blocage 4.

De façon complémentaire, la poignée 31 présente également deux rampes inclinées 311 destinées à agir simultanément sur les rampes inclinées 411 des bras 41.

Ainsi, lorsque la poignée 31 est actionnée (en la déplaçant vers le bas dans le présent mode de réalisation), les rampes 311 de la poignée coopèrent avec les rampes 411 des bras de façon à rapprocher les bras entre eux, ce qui, par conséquent, tend à déplacer les organes de blocage dans la direction indiquée par les flèches F1 et à permettre le déploiement/repli de la toile.

On note que la barre de tirage présente à nouveau la forme d'une barre creuse, dans l'évidement de laquelle sont montés les bras 41.

De plus, les bras 41 sont guidés à coulissement dans la barre 3 à l'aide de guide 34.

En outre, des moyens de rappel 35 sont montés entre les organes de blocages 4 et les guides 34 de façon que, lorsque la poignée est relâchée, les moyens en rappel tendent à ramener les organes de blocage dans une configuration telle que celle illustrée par la figure 5 (position de blocage), les organes étant plaqués contre une paroi des rail 1, 2.

On note que les organes de blocage sont préférentiellement bi-matière, de façon similaire aux patins portés par la barre de tirage et destinés à coulisser dans les rails.

De nombreuses variantes de l'invention peuvent être envisagées, tant en ce qui concerne le blocage en position d'arrêt que la cinématique des moyens d'actionnement et de transmission. Par exemple, la friction peut être remplacée par un accouplement mâle/femelle, l'élément 4 présentant un ergot pouvant pénétrer dans un logement (parmi une pluralité de logements) défini dans le rail.

Selon une autre approche, on peut prévoir que le déplacement transversal des moyens d'actionnement est transformé en une rotation de l'élément 4, qui peut alors être un élément de blocage par frottement de forme excentrique, qui vient frotter contre le rail, ou une came qui vient coopérer avec une butée (parmi plusieurs), une crémaillère...

## Revendications

1. Store à enrouleur pour un véhicule automobile, mettant en oeuvre au moins une toile d'occultation mobile entraînée par une barre de tirage (3) guidée par ses extrémités le long de deux rails de guidage,
au moins une desdites extrémités de ladite barre de tirage (3) portant un élément de blocage du déplacement de ladite barre de tirage, pouvant prendre au moins deux positions :
- une position d'arrêt, dans laquelle il coopère avec au moins une paroi du rail auquel il est associé, de façon à immobiliser ladite barre de tirage ;
- une position de déplacement, dans laquelle il est désolidarisé de la ou desdites parois, de façon que ladite barre de tirage puisse être déplacée le long desdits rails,
**caractérisé en ce que** ladite barre de tirage porte des moyens d'actionnement déportés sensiblement au milieu de ladite barre, et agissant, par l'intermédiaire de moyens de transmission, sur le ou lesdits éléments de blocage pour commander le passage de ladite position d'arrêt à ladite position de déplacement, et inversement.

2. Store à enrouleur selon la revendication 1, **caractérisé en ce que** lesdits moyens de transmission comprennent au moins une tige flexible (41) portant ou agissant sur le ou lesdits éléments de blocage (4).

3. Store à enrouleur selon la revendication 2, **caractérisé en ce que** ladite tige flexible est guidée par au moins un élément de guidage (32) porté par ladite barre de tirage.

4. Store à enrouleur selon l'une quelconque des revendications 2 et 3, **caractérisé en ce que** ladite tige flexible (41) peut prendre :
- une position de déplacement, dans laquelle elle est sensiblement linéaire et permet le déplacement de la barre de tirage le long desdits rails de guidage (1, 2) ;
- une position d'arrêt, dans laquelle elle est arquée ou forme un angle, de façon que ces extrémités agissent sur lesdits éléments de blocage (4) pour qu'ils coopèrent avec lesdits rails de guidage (1, 2), de façon à immobiliser ladite barre de tirage par rapport auxdits rails.

5. Store à enrouleur selon l'une quelconque des revendications 2 à 4, **caractérisé en ce que** ladite tige flexible est guidée de façon que le déplacement du ou desdits éléments de blocage se fasse essentiellement dans un plan parallèle au plan de ladite toile.

6. Store à enrouleur selon la revendication 5, **caractérisé en ce que** ladite tige flexible (41) est guidée par au moins deux éléments de guidage (32) de façon que, en partie centrale, elle se déplace essentiellement perpendiculairement audit plan de ladite toile.

7. Store à enrouleur selon l'une quelconque des revendications 4 à 6, **caractérisé en ce que** lesdits moyens d'actionnement (31) agissent directement sur la partie centrale de ladite tige flexible (41).

8. Store à enrouleur selon l'une quelconque des revendications 1 à 7, **caractérisé en ce que** lesdits moyens de transmission comprennent au moins une tige rigide.

9. Store à enrouleur selon les revendications 1 à 8, **caractérisé en ce que** lesdits moyens de transmission mettent en oeuvre un jeu de rampes inclinées.

10. Store à enrouleur selon la revendication 9, **caractérisé en ce que** lesdits moyens de transmission comprennent deux bras présentant chacun une rampe inclinée, sur lesquelles ledit élément d'actionnement peut agir simultanément.

11. Store à enrouleur selon la revendication 10, **caractérisé en ce que** chacun desdits bras se déplace sensiblement parallèlement au plan défini par ladite toile.

12. Store à enrouleur selon l'une quelconque des revendications 1 à 11, **caractérisé en ce qu'**il comprend des moyens de rappel tendant à le ramener dans ladite position d'arrêt.

13. Store à enrouleur selon les revendications 11 et 12, **caractérisé en ce que** des moyens de rappel sont montés entre un guide de coulissement de chacune desdites tiges et l'élément de blocage correspondant.

14. Store à enrouleur selon l'une quelconque des revendications 1 à 13, **caractérisé en ce que** lesdits moyens d'actionnement (31) se déplacent sensiblement perpendiculairement au plan défini par ladite toile.

15. Store à enrouleur selon l'une quelconque des revendications 1 à 14, **caractérisé en ce que** lesdits moyens d'actionnement (31) comprennent une poignée.

16. Store à enrouleur selon l'une quelconque des revendications 1 à 15, **caractérisé en ce qu'**au moins un desdits élément de blocage coopère avec ledit rail par frottement, dans ladite position d'arrêt.

17. Store à enrouleur selon la revendication 16, **caractérisé en ce qu'**au moins un desdits élément de blocage est réalisé en au moins deux matériaux.

18. Store à enrouleur selon l'une quelconque des revendications 1 à 15, **caractérisé en ce qu'**au moins un desdits élément de blocage coopère avec ledit rail par engagement d'une pièce mâle dans une pièce femelle ou par mise en butée de deux pièces configurées à cet effet, dans ladite position d'arrêt.

19. Store à enrouleur selon l'une quelconque des revendications 1 à 18, **caractérisé en ce que** lesdits moyens de blocage effectuent un mouvement de rotation, lors du passage de ladite position d'arrêt à ladite position de déplacement, et inversement.

20. Store à enrouleur selon l'une quelconque des revendications 1 à 19, **caractérisé en ce qu'**il est destiné à occulter au moins une portion d'au moins un élément appartenant au groupe comprenant :
- les pavillons vitrés ;
- les vitres arrière ;
- les pare-brise ;
- les vitres latérales ;
- les toits ouvrants ;
- les coffres à bagages.

21. Véhicule automobile, **caractérisé en ce qu'**il comprend au moins un store à enrouleur selon l'une quelconque des revendications 1 à 20.

## Claims

1. Roller blind for a motor vehicle, using at least one movable screening web which is driven by a pulling bar (3) which is guided by the ends thereof along two guiding rails, at least one of the ends of the pulling bar (3) carrying an element which is for blocking the movement of the pulling bar and which is able to take up at least two positions:
- a stop position in which it co-operates with at least one wall of the rail with which it is associated, in order to immobilise the pulling bar;
- a movement position in which it is disengaged from the wall(s) so that the pulling bar can be moved along the rails, **characterised in that** the pulling bar carries actuation means which are offset substantially at the centre of the bar, and which act, via transmission means, on the blocking element(s) in order to control the movement from the stop position to the movement position, and vice-versa.

2. Roller blind according to claim 1, **characterised in that** the transmission means comprise at least one flexible rod (41) which carries or acts on the blocking element(s) (4).

3. Roller blind according to claim 2, **characterised in that** the flexible rod(s) is/are guided by at least one guiding element (32) which is carried by the pulling bar.

4. Roller blind according to either claim 2 or claim 3, **characterised in that** the flexible rod (41) can take up:
- a movement position in which it is substantially linear and allows the movement of the pulling bar along the guiding rails (1, 2);
- a stop position in which it is arched or forms an angle so that these ends act on the blocking elements (4) so that they co-operate with the guide rails (1, 2) in order to immobilise the pulling bar with respect to the rails.

5. Roller blind according to any one of claims 2 to 4, **characterised in that** the flexible rod is guided so that the movement of the blocking element(s) is carried out substantially in a plane parallel with the plane of the web.

6. Roller blind according to claim 5, **characterised in that** the flexible rod (41) is guided by at least two guiding elements (32) so that, at the central portion, it moves substantially perpendicularly relative to the plane of the web.

7. Roller blind according to any one of claims 4 to 6, **characterised in that** the actuation means (31) act directly on the central portion of the flexible rod (41).

8. Roller blind according to any one of claims 1 to 7, **characterised in that** the transmission means comprise at least one rigid rod.

9. Roller blind according to claims 1 to 8, **characterised in that** the transmission means use a set of inclined ramps.

10. Roller blind according to claim 9, **characterised in that** the transmission means comprise two arms which each have an inclined ramp, on which the actuation element can act simultaneously.

11. Roller blind according to claim 10, **characterised in that** each of the arms moves substantially parallel with the plane defined by the web.

12. Roller blind according to any one of claims 1 to 11, **characterised in that** it comprises return means which tend to return it into the stop position.

13. Roller blind according to claims 11 and 12, **characterised in that** return means are mounted between a sliding guide of each of the rods and the corresponding blocking element.

14. Roller blind according to any one of claims 1 to 13, **characterised in that** the actuation means (31) move substantially perpendicularly relative to the plane defined by the web.

15. Roller blind according to any one of claims 1 to 14, **characterised in that** the actuation means (31) comprise a handle.

16. Roller blind according to any one of claims 1 to 15, **characterised in that** at least one of the blocking elements co-operates with the rail by means of friction, in the stop position.

17. Roller blind according to claim 16, **characterised in that** at least one of the blocking elements is produced from at least two materials.

18. Roller blind according to any one of claims 1 to 15, **characterised in that** at least one of the blocking elements co-operates with the rail by means of engagement of a male component in a female component or by placing two components configured for this purpose in abutment in the stop position.

19. Roller blind according to any one of claims 1 to 18, **characterised in that** the blocking means carry out a rotation movement during movement from the stop position to the movement position, and vice-versa.

20. Roller blind according to any one of claims 1 to 19, **characterised in that** it is intended to screen at least one portion of at least one element belonging to the group comprising:
- glazed roofs;
- rear windows;
- windscreens;
- side windows;
- opening roofs;
- luggage compartments.

21. Motor vehicle, **characterised in that** it comprises at least one roller blind according to any one of claims 1 to 20.

## Patentansprüche

1. Rollvorhang für ein Kraftfahrzeug, der mindestens ein bewegliches Verdunkelungstuch umsetzt, das von einer Zugstange (3) angetrieben wird, die an ihren Enden entlang von zwei Führungsschienen geführt wird,
wobei mindestens eines der Enden der Zugstange (3) ein Element zum Blockieren der Bewegung der Zugstange trägt, das mindestens zwei Positionen einnehmen kann:
- eine Stoppposition, in der es mit mindestens einer Wand der Schiene, zu der es gehört, zusammenwirkt, um die Zugstange stillzustellen;
- eine Bewegungsposition, in der es fest mit der Wand oder den Wänden derart verbunden ist, dass die Zugstange entlang der Schienen verstellt werden kann,
**dadurch gekennzeichnet, dass** die Zugstange Mittel zum Betätigen trägt, die im Wesentlichen in die Mitte der Stange verlegt sind, die über Übertragungsmittel auf das oder die Blockierelemente einwirken, um den Übergang von der Stillstellposition auf die Bewegungsposition und umgekehrt zu steuern.

2. Rollvorhang nach Anspruch 1, **dadurch gekennzeichnet, dass** die Übertragungsmittel mindestens eine biegsame Stange (41) aufweisen, die das oder die Blockierelemente (4) trägt oder auf sie einwirkt.

3. Rollvorhang nach Anspruch 2, **dadurch gekennzeichnet, dass** die biegsame Stange oder die biegsamen Stangen von mindestens einem Führungselement (32) geführt werden, das von der Zugstange getragen wird.

4. Rollvorhang nach einem der Ansprüche 2 und 3, **dadurch gekennzeichnet, dass** die biegsame Stange (41):
- eine Bewegungsposition einnehmen kann, in der sie im Wesentlichen linear ist und das Bewegen der Zugstange entlang der Führungsschiene (1, 2) erlaubt;
- eine Stoppposition einnehmen kann, in der sie gebogen ist oder einen Winkel bildet, so dass diese Enden auf die Blockierelemente (4) einwirken, damit sie mit den Führungsschienen (1, 2) zusammenwirken, um die Zugstange in Bezug zu den Schienen stillzustellen.

5. Rollvorhang nach einem der Ansprüche 2 bis 4, **dadurch gekennzeichnet, dass** die biegsame Stange derart geführt wird, dass die Bewegung des Blockierelements oder der Blockierelemente im Wesentlichen in einer Ebene parallel zu der Ebene des Tuchs erfolgt.

6. Rollvorhang nach Anspruch 5, **dadurch gekennzeichnet, dass** die biegsame Stange (41) von mindestens zwei Führungselementen (32) derart geführt wird, dass sie sich im zentralen Teil im Wesentlichen im rechten Winkel zu der Ebene des Tuchs bewegt.

7. Rollvorhang nach einem der Ansprüche 4 bis 6, **dadurch gekennzeichnet, dass** die Betätigungsmittel (31) direkt auf den zentralen Teil der biegsamen Stange (41) einwirken.

8. Rollvorhang nach einem der Ansprüche 1 bis 7, **dadurch gekennzeichnet, dass** die Übertragungsmittel mindestens eine starre Stange aufweisen.

9. Rollvorhang nach den Ansprüchen 1 bis 8, **dadurch gekennzeichnet, dass** die Übertragungsmittel einen Satz schiefer Rampen umsetzen.

10. Rollvorhang nach Anspruch 9, **dadurch gekennzeichnet, dass** die Übertragungsmittel zwei Arme aufweisen, die jeweils eine schiefe Rampe umfassen, auf die das Betätigungselement gleichzeitig einwirken kann.

11. Rollvorhang nach Anspruch 10, **dadurch gekennzeichnet, dass** sich jeder der Arme im Wesentlichen parallel zu der Ebene bewegt, die von dem Tuch definiert ist.

12. Rollvorhang nach einem der Ansprüche 1 bis 11, **dadurch gekennzeichnet, dass** er Rückholmittel aufweist, die dazu tendieren, ihn in die Stoppposition zurückzubringen.

13. Rollvorhang nach den Ansprüchen 11 und 12, **dadurch gekennzeichnet, dass** Rückholmittel zwischen einer Gleitführung jeder der Stangen und dem entsprechenden Blockierelement montiert sind.

14. Rollvorhang nach einem der Ansprüche 1 bis 13, **dadurch gekennzeichnet, dass** sich die Betätigungsmittel (31) im Wesentlichen senkrecht zu der von dem Tuch definierten Ebene bewegen.

15. Rollvorhang nach einem der Ansprüche 1 bis 14, **dadurch gekennzeichnet, dass** die Betätigungsmittel (31) einen Griff aufweisen.

16. Rollvorhang nach einem der Ansprüche 1 bis 15, **dadurch gekennzeichnet, dass** mindestens eines der Blockierelemente mit der Schiene durch Reibung in der Stoppposition zusammenwirkt.

17. Rollvorhang nach Anspruch 16, **dadurch gekennzeichnet, dass** mindestens eines der Blockierelemente aus mindestens zwei Werkstoffen hergestellt ist.

18. Rollvorhang nach einem der Ansprüche 1 bis 15, **dadurch gekennzeichnet, dass** mindestens eines der Blockiermittel mit der Schiene durch Eingreifen eines Steckteils in einen Buchsenteil oder durch Anschlagen von zwei Teilen, die dazu konfiguriert sind, in der Stoppposition zusammenwirkt.

19. Rollvorhang nach einem der Ansprüche 1 bis 18, **dadurch gekennzeichnet, dass** die Blockiermittel bei dem Übergang von der Stoppposition zu der Betätigungsposition und umgekehrt eine Drehbewegung ausführen.

20. Rollvorhang nach einem der Ansprüche 1 bis 19, **dadurch gekennzeichnet, dass** er dazu bestimmt ist, mindestens einen Abschnitt mindestens eines Elements zu verdunkeln, das zu der Gruppe gehört, die aus Folgendem besteht:
- verglaste Fahrzeughimmel;
- Heckscheiben;
- Windschutzscheiben;
- seitliche Scheiben;
- Schiebedächer;
- Gepäckkofferräume.

21. Kraftfahrzeug, **dadurch gekennzeichnet, dass** es mindestens einen Rollvorhang nach einem der Ansprüche 1 bis 20 aufweist.
